# EUROPEAN PATENT APPLICATION

(11) **EP 4 847 393 A1**
(43) Date of publication of application: **02.12.2026**
(21) Application number: 24920109.6
(22) Date of filing: 12.11.2024
(51) Int. Cl.: B64G 1/42, B64G 1/40, F03H 1/00, H05H 1/54

(54) **POWER SUPPLY DEVICE**

(30) Priority: 22.01.2024 JP 2024007472
(71) Applicant: Japan Aerospace Exploration Agency, Tokyo 182-8522 (JP)
(72) Inventor: MATSUNAGA, Yoshiki, Chofu-shi, Tokyo 182-8522 (JP); CHO, Shinatora, Chofu-shi, Tokyo 182-8522 (JP); WATANABE, Hiroki, Chofu-shi, Tokyo 182-8522 (JP); KUSAWAKE, Hiroaki, Chofu-shi, Tokyo 182-8522 (JP)
(74) Representative: Richly & Ritschel Patentanwälte PartG mbB
(86) International application number: PCT/JP2024/040168
(87) International publication number: WO 2025/158751

(57) **Abstract**

A power supply device for supplying power to an electric propulsion device that generates thrust for a spacecraft includes a plurality of batteries, a plurality of first switch units, each of which is provided in correspondence with a pair of two adjacent batteries, and configured to switch a connection between the two adjacent batteries to a series connection or a parallel connection, and a second switch unit configured to switch whether or not to connect a power supply source to each of the batteries.

## Description

### TECHNICAL FIELD

The present invention relates to a power supply device.

Priority is claimed on Japanese Patent Application No. 2024-007472, filed January 22, 2024, the content of which is incorporated herein by reference

### BACKGROUND ART

The use of electric propulsion devices, which generate thrust for controlling an orbit and attitude of spacecraft such as artificial satellites, has expanded, and the market is rapidly growing. Electric propulsion devices can reduce an amount of propellant gas required for spacecraft compared with chemical propulsion devices, and therefore, their adoption is increasing not only in satellites for deep-space exploration and geostationary satellites but also in constellation satellites operated in low Earth orbit. In recent years, the use of systems adopting Hall thrusters, particularly among electric propulsion systems, has been rapidly advancing. This is due to the advantage that Hall thruster systems provide high thrust per unit power.

A Hall thruster generates thrust by, for example, ionizing a predetermined gas such as xenon and accelerating ions extracted from the resulting plasma, and ejecting them into outer space. In a Hall thruster system, discharge is generated in the Hall thruster by power supplied from a power processing unit (PPU), and ions are extracted from plasma generated by this discharge. In the Hall thruster system, power required for operation of the Hall thruster is supplied to the power processing unit via a power controller from, for example, a solar cell paddle (solar power generation device) or a battery. Therefore, the power that can be used by the Hall thruster depends on the power generated by the spacecraft. On the other hand, in general, it is difficult for the Hall thruster to improve propulsion efficiency as the supplied power decreases. For this reason, in low-power Hall thrusters of several tens of watts [W] to several hundreds of watts [W], a thrust-to-power ratio representing thrust generated per unit power and specific impulse corresponding to fuel efficiency indicating how much gas is used are not so high. However, in small spacecraft (for example, on 100 [kg] class) that do not generate high power, it is inevitable to select low-power Hall thrusters having relatively low propulsion efficiency. Therefore, in small spacecraft equipped with low-power Hall thrusters, advantages inherent to Hall thrusters, such as the reduction of propellant gas and high thrust per unit power, are limited, and there have been cases where missions in which superiority over spacecraft equipped with other propulsion systems can be demonstrated are restricted.

In order to mount, on a small spacecraft, a Hall thruster capable of achieving a power level at which a high thrust-to-power ratio and high propulsion efficiency, which are inherent characteristics of Hall thrusters, can be obtained (hereinafter referred to as a "high-power Hall thruster"), for example, it is conceivable to adopt an intermittent operation method in which a power controller supplies battery power, such as system power for operating the spacecraft system, to the power processing unit only for a short time to operate the Hall thruster, and thereafter waits until the battery is recharged before supplying power again to the power processing unit. However, in order to adopt such an intermittent operation method, it is necessary to increase the power capacity of the battery and the power controller. In addition, the power processing unit must have a configuration capable of handling high power. Here, the power processing unit includes, for example, a plurality of power supplies such as an anode power supply, a keeper power supply, a heater power supply, and a coil power supply, and a power control unit. This power processing unit accounts for a large proportion of the weight and cost of the Hall thruster system. Therefore, even if high propulsion efficiency can be obtained by mounting a high-power Hall thruster on a small spacecraft, the overall advantage may be reduced.

Conventionally, technologies for reducing the size and cost of the power processing unit have been proposed. One such proposal is a technique for reducing the size of the anode power supply, which accounts for most of the power supplied to the Hall thruster among a plurality of power supplies constituting the power processing unit. As techniques for reducing the size of the anode power supply, for example, a technique for reducing the size adopting a resonant converter as the anode power supply (e.g., Patent Document 1), and a technique for reducing the size of a filter provided in the anode power supply by varying an output voltage of the anode power supply at high frequency to suppress discharge instability peculiar to the Hall thruster (e.g., Patent Document 2), have been proposed. As another proposal, a technique in which a heater power supply for a hollow cathode provided in a Hall thruster among a plurality of power supplies constituting a power processing unit is eliminated (removed), and discharge in a hollow cathode is initiated by applying a high-voltage pulse generated by a keeper power supply has been proposed (e.g., Patent Document 3). In this conventional technique, an electron emission material is not heated by the heater power supply, but electrons are strongly extracted from the hollow cathode by a high-voltage pulse generated by the keeper power supply, thereby generating discharge and plasma between the hollow cathode and the keeper electrode.

### Citation List

### Patent Document

| | |
|---|---|
| [Patent Document 1] | United States Patent No. 6169668 |
| [Patent Document 2] | Japanese Unexamined Patent Application, First Publication No. 2014-005762 |
| [Patent Document 3] | Published Japanese Translation No. 2022-530748 of the |

### PCT International Publication

### SUMMARY OF THE INVENTION

### Technical Problem

However, in the conventional technique in which the size and cost of the power processing unit are reduced by miniaturizing the anode power supply, because the anode power supply, which is an essential power supply for accelerating and ejecting gas in the Hall thruster, is miniaturized, there may be another issue for securing the performance of the Hall thruster system, such as the need to improve the power density of the anode power supply. On the other hand, in the conventional technique in which the size and cost of the power processing unit are reduced by eliminating the heater power supply, there may be other issues for continuing the operation of the Hall thruster system, such as the need to suppress the wear of the material of the keeper electrode (or the end portion of the hollow cathode on the keeper electrode side) due to arc discharge of high-voltage pulses generated by the keeper power supply, and reduction in insulation between electrodes caused by such material wear. Therefore, in the conventional techniques, it has been difficult, in some cases, to demonstrate superiority by mounting a high-power Hall thruster on a small spacecraft when considering missions to be performed by the spacecraft.

The present invention has been made on the basis of the above-described recognition of problems, and an objective thereof is to provide a power supply device capable of supplying power more efficiently to an electric propulsion device.

### Solution to Problem

To achieve the above-described objective, a power supply device according to an aspect of the present invention is a power supply device for supplying power to an electric propulsion device that generates thrust for a spacecraft comprises: a plurality of batteries; a plurality of first switch units, each of which is provided in correspondence with a pair of two adjacent batteries, and configured to switch a connection between the two adjacent batteries to a series connection or a parallel connection; and a second switch unit configured to switch whether or not to connect a power supply source to each of the batteries.

### Advantageous Effects of Invention

According to an aspect of the present invention, it is possible to provide a power supply device capable of supplying power more efficiently to an electric propulsion device.

### BRIEF DESCRIPTION OF DRAWINGS

[FIG. 1] A diagram showing an example of a configuration of a Hall thruster system including a power processing unit having a power supply device according to an embodiment.
[FIG. 2] A diagram showing an example of a configuration of a power supply device according to a first embodiment.
[FIG. 3] A diagram showing an example of an operation of the power supply device according to the first embodiment.
[FIG. 4] A diagram showing another example of use and configuration of the power supply device according to the first embodiment.
[FIG. 5] A diagram showing an example of a configuration of a power supply device according to a second embodiment.

### DESCRIPTION OF EMBODIMENTS

Hereinafter, embodiments of a power supply device of the present invention will be described with reference to the drawings. When the present application is translated from Japanese into English, as used throughout the present disclosure, the singular forms "a," "an," and "the" include plural references unless the context clearly dictates otherwise. The power supply device of the present invention is applied to a system of an electric propulsion device. The system of the electric propulsion device may be a Hall thruster system including a Hall thruster or may be an ion engine system including an ion engine. In the following description, a case where the system of the electric propulsion device is a Hall thruster system including a Hall thruster will be described as an example.

The Hall thruster is, for example, an electric propulsion device that generates thrust for controlling the orbit of a spacecraft moving in outer space or controlling the attitude of the spacecraft, by accelerating ions extracted from plasma generated by ionizing a predetermined gas (propellant gas) such as xenon and ejecting them into outer space. The propellant gas may be, for example, krypton, argon, nitrogen, oxygen, vaporized iodine, water, or the like.

A spacecraft adopting a Hall thruster system may be an artificial satellite that moves while orbiting along a predetermined orbit above the surface of the Earth or above the surface of another celestial body or object, or may be an observation satellite that travels to observe another celestial body or object (and may further return to the Earth). Examples of other celestial bodies include planets other than the Earth such as Mars and Venus, satellites such as the Moon and Titan, asteroids such as Itokawa and Ryugu, and the like. Examples of other objects include rocks and the like.

### [Configuration of Hall Thruster System]

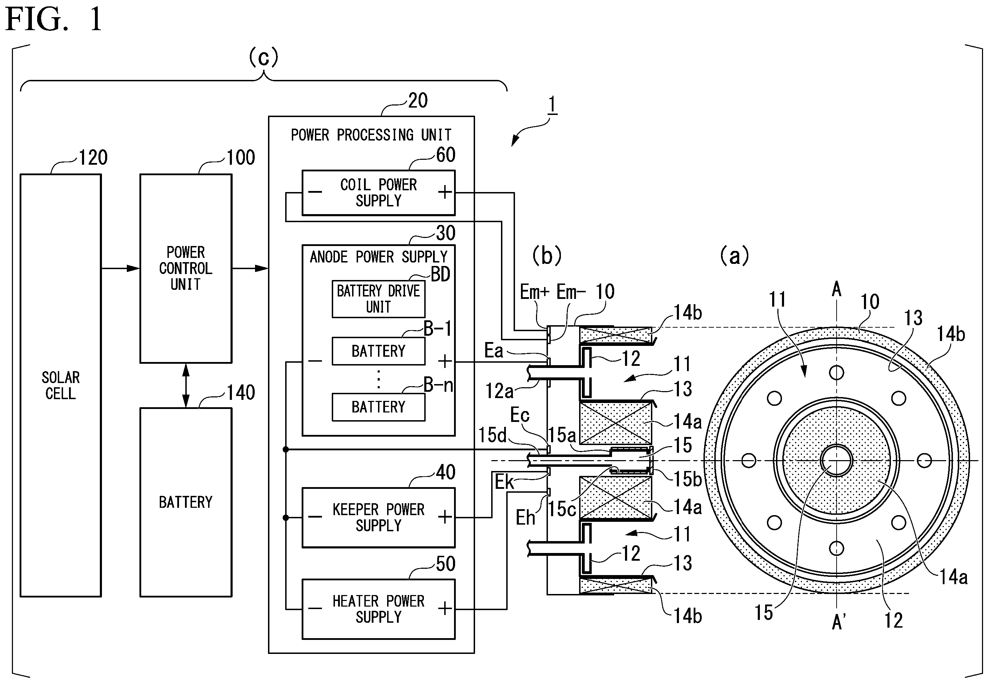

FIG. 1 is a diagram showing an example of a configuration of a Hall thruster system including a power processing unit having a power supply device according to an embodiment. A Hall thruster system 1 includes, for example, a Hall thruster 10 and a power processing unit (PPU) 20. In FIG. 1(a), an example when viewed from a side from which the Hall thruster 10 ejects ions extracted from plasma generated from propellant gas into outer space is shown. In FIG. 1(b), an example of a cross-sectional view taken along line A-A' of the Hall thruster 10 shown in FIG. 1(a) and an example of a connection between the Hall thruster 10 and the power processing unit 20 are shown. In FIG. 1(c), an example of a configuration of the Hall thruster system 1 is shown.

First, the structure of the Hall thruster 10 will be described with reference to FIGS. 1(a) and 1(b). In the Hall thruster 10, a hollow cathode portion 15 is arranged at the center of a cylindrical housing, and from the center toward the outer periphery, an internal electromagnet 14a, a channel portion 11, and an external electromagnet 14b are arranged annularly in this order. In the following description, when each of the internal electromagnet 14a and the external electromagnet 14b is not distinguished, it is simply referred to as an "electromagnet 14." In the Hall thruster 10, the channel portion 11 is formed as a groove along the electromagnet 14, and the periphery of the groove is surrounded by a wall portion 13 made of, for example, ceramic. Also, an anode 12 is arranged at the bottom of the groove forming the channel portion 11.

Next, the configuration of the Hall thruster 10 and the power processing unit 20, and the connection between the Hall thruster 10 and the power processing unit 20 will be described with reference to FIGS. 1(b) and 1(c). In FIG. 1(c), constituent elements of a spacecraft related to the Hall thruster system 1 are also shown. More specifically, a power controller 100, which supplies power to respective constituent elements (not shown) of the spacecraft including the power processing unit 20, and a solar cell 120 and a battery 140, which output or store original power to be supplied by the power controller 100 to the respective constituent elements, are shown. The power controller 100 controls the supply of power to the respective components of the spacecraft. For example, the power controller 100 supplies power obtained by performing conversion into voltage and current values necessary for each constituent element to each constituent element. The solar cell 120 is, for example, a system power supply that outputs power generated by a solar array paddle (solar power generation device) provided in the spacecraft. The battery 140 is a storage battery of the system power supply that stores power supplied by the power controller 100 and supplies the stored power to the power controller 100 in accordance with control from the power controller 100. The power controller 100 may supply power output from the solar cell 120 to the respective constituent elements of the spacecraft, or may store power output from the solar cell 120 in the battery 140 and, as needed, receive power from the battery 140 to supply power to the respective constituent elements of the spacecraft. In the following description, when the solar cell 120 and the battery 140 are not distinguished from each other, they are referred to as a "system power supply."

The power controller 100 (which may include the solar cell 120 and the battery 140) is an example of a "power supply source." The solar cell 120 and the battery 140 are examples of a "system power supply."

As described above, the Hall thruster 10 includes, for example, the channel portion 11, the anode 12, the wall portion 13, the electromagnet 14, and the hollow cathode portion 15. The hollow cathode portion 15 includes, for example, a hollow cathode body 15a, a keeper electrode body 15b, a heater 15c, and a gas supply pipe 15d. The power processing unit 20 supplies power, on the basis of power supplied by the power controller 100, to each constituent element included in the Hall thruster 10. The power processing unit 20 includes, for example, an anode power supply 30, a keeper power supply 40, a heater power supply 50, and a coil power supply 60. Each of the anode power supply 30, the keeper power supply 40, the heater power supply 50, and the coil power supply 60 is a DC power supply that supplies power required for the corresponding component of the Hall thruster 10. Each of the anode power supply 30, the keeper power supply 40, the heater power supply 50, and the coil power supply 60 converts power supplied by the power controller 100 and supplies the converted power to the corresponding constituent element.

The anode power supply 30 is a DC power supply that supplies power to the anode 12. For example, the anode power supply 30 supplies power having a maximum voltage value of 300 [V] and a current value of 3 [A] to the anode 12. In this case, a Hall thruster 10 of about 1 [kW] class is configured. The anode power supply 30 may supply power having a maximum voltage value of 300 [V] and a current value of 20 [A] to the anode 12. In this case, a Hall thruster 10 of about 6 [kW] class is configured. The power supplied by the anode power supply 30 is not limited to a maximum voltage value = 300 [V]. The anode power supply 30 may supply, for example, power having a maximum voltage value of 150 [V] or 1000 [V] or the like, in accordance with the performance of the Hall thruster 10. The anode power supply 30 includes a plurality of batteries B and a battery drive unit BD. In FIG. 1(c), an example in which the anode power supply 30 includes n (n is a natural number) batteries B from a battery B-1 to a battery B-n is shown. The anode power supply 30 stores power supplied by the power controller 100 in each battery B and supplies the stored power to the anode 12. Details of a more detailed configuration of the anode power supply 30 will be described below.

The anode power supply 30 is an example of a "power supply device." The battery B is an example of a "battery."

The keeper power supply 40 is a DC power supply that supplies power to the keeper electrode body 15b. For example, the keeper power supply 40 supplies power having a voltage value of 200 [V] and a current value of 1 [A] to the keeper electrode body 15b. Although a configuration in which the negative side of the keeper power supply 40 is connected to the negative side of the anode power supply 30 (or connected to a cathode electrode Ec connected to the hollow cathode body 15a) is shown in FIG. 1(c), the negative side of the keeper power supply 40 may be connected, for example, to a dedicated electrode provided in the Hall thruster 10. The keeper power supply 40 may be omitted, for example, in a configuration in which power is supplied from the anode power supply 30 to the keeper electrode body 15b.

The heater power supply 50 is a DC power supply that supplies power to the heater 15c. For example, the heater power supply 50 supplies power having a voltage value of 100 [V] and a current value of 1 [A], power having a voltage value of 10 [V] and a current value of 10 [A], or power having a voltage value of 20 [V] and a current value of 5 [A] to the heater 15c. Although a configuration in which the negative side of the heater power supply 50 is connected to the negative side of the anode power supply 30 (or connected to a cathode electrode Ec connected to the hollow cathode body 15a) is shown in FIG. 1(c), the negative side of the heater power supply 50 may be connected, for example, to a dedicated electrode provided in the Hall thruster 10. The heater power supply 50 may be omitted, for example, when a high-voltage pulse is applied to the keeper electrode body 15b by the keeper power supply 40.

The coil power supply 60 is a DC power supply that supplies power to the electromagnet 14 (more specifically, coils constituting the internal electromagnet 14a and the external electromagnet 14b). For example, the coil power supply 60 supplies power having a voltage value of 100 [V] and a current value of 1 [A], power having a voltage value of 10 [V] and a current value of 10 [A], or power having a voltage value of 20 [V] and a current value of 5 [A] to each electromagnet 14.

Each of the keeper power supply 40, the heater power supply 50, and the coil power supply 60 may be, for example, a DC power supply having a fixed voltage value and a fixed current value in which ON/OFF of power output is controlled in accordance with control from the power controller 100 (or a power control unit (not shown) provided in the power processing unit 20). Each of the keeper power supply 40, the heater power supply 50, and the coil power supply 60 may be a switching power supply in which a voltage value and a current value to be supplied are controlled in accordance with control from the power controller 100 (or the power control unit (not shown) provided in the power processing unit 20).

The hollow cathode body 15a is an electron source that supplies electrons for starting an operation of the Hall thruster 10 by ionizing propellant gas supplied into the channel portion 11 and extracting ions, and that emits electrons for maintaining plasma and electrically neutralizing accelerated ions during the operation of the Hall thruster 10. The propellant gas identical to that supplied to the anode 12 is supplied to the hollow cathode body 15a from the gas supply pipe 15d. The hollow cathode body 15a ionizes the propellant gas supplied by the gas supply pipe 15d and emits the generated electrons to the channel portion 11 side. The negative side of the anode power supply 30 is connected to the cathode electrode Ec connected to the hollow cathode body 15a. Although an example in which the cathode electrode Ec is arranged on a side of the housing of the Hall thruster 10 opposite to the side that ejects ions extracted from plasma into outer space is shown in FIG. 1(b), the hollow cathode body 15a itself (which may be the portion of the gas supply pipe 15d) may serve as the cathode electrode Ec. The keeper electrode body 15b is arranged in proximity to a tip portion of the hollow cathode body 15a. However, the hollow cathode body 15a and the keeper electrode body 15b are insulated from each other. Further, an outer periphery of the hollow cathode body 15a is covered with the heater 15c. The positive side of the heater power supply 50 is connected to the heater electrode Eh connected to the heater 15c. That is, the heater power supply 50 is connected between the heater 15c (heater electrode Eh) and the hollow cathode body 15a (cathode electrode Ec). The heater 15c generates heat in accordance with power supplied by the heater power supply 50, thereby heating a part referred to as an emitter or electron emission material (not shown) provided in the hollow cathode body 15a so that more electrons are emitted from the hollow cathode body 15a. The positive side of the keeper power supply 40 is connected to the keeper electrode Ek connected to the keeper electrode body 15b. That is, the keeper power supply 40 is connected between the keeper electrode body 15b (keeper electrode Ek) and the hollow cathode body 15a (cathode electrode Ec). If a high voltage is applied to the keeper electrode body 15b by the power supplied from the keeper power supply 40, discharge occurs between the hollow cathode body 15a and the keeper electrode body 15b, and due to this discharge, the propellant gas supplied into the hollow cathode body 15a from the gas supply pipe 15d is ionized to generate plasma. Electrons extracted from the plasma by a potential gradient between the hollow cathode body 15a and the keeper electrode body 15b are emitted to the channel portion 11 side.

The anode 12 is a positive electrode for ionizing propellant gas supplied into the channel portion 11 by the gas supply pipe 12a and extracting ions. Whether or not the propellant gas is supplied into the channel portion 11 by the gas supply pipe 12a and an amount of propellant gas supplied are controlled, for example, by controlling the opening and closing of a valve arranged in the gas supply pipe 12a. A valve power supply (not shown) may be provided in the power processing unit 20. In this case, the power controller 100 may control the opening and closing of the valve arranged in the gas supply pipe 12a by controlling values of a voltage and a current supplied from the valve power supply (not shown) to the valve. The positive side of the anode power supply 30 is connected to an anode electrode Ea of the anode 12. That is, the anode power supply 30 is connected between the anode 12 (anode electrode Ea) and the hollow cathode body 15a (cathode electrode Ec). Although an example in which the anode electrode Ea is arranged at an end portion of the housing of the Hall thruster 10 like the cathode electrode Ec is shown in FIG. 1(b), the anode 12 itself may serve as the anode electrode Ea.

The anode 12 is an example of a "first power supply source."

The electromagnet 14 generates a magnetic field in a range in which the anode 12 is arranged and surrounded by the wall portion 13. The electromagnet 14 has a configuration in which a coil is wound around a core made of a magnetic material. The positive side of the coil power supply 60 is connected to a coil positive electrode Em+ connected to a positive-side terminal of the coil. The negative side of the coil power supply 60 is connected to a coil negative electrode Em- connected to a negative-side terminal of the coil. The electromagnet 14 generates a magnetic field within the channel portion 11 in accordance with power supplied to the coil by the coil power supply 60. Although a detailed connection between the coil power supply 60 and the coil is omitted in FIG. 1, power from the coil power supply 60 is supplied to each of the coil of the internal electromagnet 14a and the coil of the external electromagnet 14b. For example, power from the coil power supply 60 is supplied to each of the coils of the internal electromagnet 14a and the external electromagnet 14b along a path returning from the positive side of the coil power supply 60 to the negative side of the coil power supply 60 through the coil positive electrode Em+, the positive-side terminal of the coil of the external electromagnet 14b, the negative-side terminal of the coil of the external electromagnet 14b, the positive-side terminal of the coil of the internal electromagnet 14a, the negative-side terminal of the coil of the internal electromagnet 14a, and the coil negative electrode Em-. The coil positive electrode Em+ and the coil negative electrode Em- are not limited to a configuration corresponding to each of the coil of the internal electromagnet 14a and the coil of the external electromagnet 14b. For example, a configuration in which a coil positive electrode Em+ and a coil negative electrode Em-corresponding to the coil of the internal electromagnet 14a and a coil positive electrode Em+ and a coil negative electrode Em- corresponding to the coil of the external electromagnet 14b are provided, i.e., the coil positive electrode Em+ and the coil negative electrode Em- are provided separately for each of the coil of the internal electromagnet 14a and the coil of the external electromagnet 14b, may be adopted. Furthermore, a configuration for supplying power to each of the coil of the internal electromagnet 14a and the coil of the external electromagnet 14b is not limited to the coil power supply 60. For example, a configuration in which the coil power supply 60 is not provided in the power processing unit 20 (and therefore, the coil positive electrode Em+ and the coil negative electrode Em- are not provided) may be adopted. In this case, for example, a configuration in which each of the coil of the internal electromagnet 14a and the coil of the external electromagnet 14b is connected between the hollow cathode body 15a and the cathode electrode Ec may be adopted. More specifically, a configuration in which each of the coils of the internal electromagnet 14a and the external electromagnet 14b is connected from the hollow cathode body 15a to the cathode electrode Ec via the positive-side terminal of the coil of the external electromagnet 14b, the negative-side terminal of the coil of the external electromagnet 14b, the positive-side terminal of the coil of the internal electromagnet 14a, and the negative-side terminal of the coil of the internal electromagnet 14a so that power is supplied to each of the coil of the internal electromagnet 14a and the coil of the external electromagnet 14b may be adopted. In this case, the electromagnet 14 generates, within the channel portion 11, a magnetic field corresponding to the power supplied to the coil by supplying a current, which flows when the hollow cathode body 15a extracts ions from propellant gas supplied to plasma within the channel portion 11, to the coil.

In the Hall thruster 10, the anode 12 and the hollow cathode body 15a are insulated from each other. In the Hall thruster 10, in a state in which the generation of a magnetic field within the channel portion 11 by the electromagnet 14 and the application of a high voltage to the anode 12 by power supplied from the anode power supply 30 occur in this order, in the reverse order, or simultaneously, if electrons are extracted from the propellant gas ionized by plasma generated according to discharge between the hollow cathode body 15a and the keeper electrode body 15b and emitted to the channel portion 11 side, discharge occurs between the anode 12 and the hollow cathode body 15a. By this discharge, the propellant gas supplied into the channel portion 11 from the gas supply pipe 12a is ionized to generate plasma. In the Hall thruster 10, ions are extracted from the plasma while being accelerated by a potential gradient within the generated plasma, and are ejected from the channel portion 11 into outer space.

### <First Embodiment>

### [Configuration of Anode Power Supply]

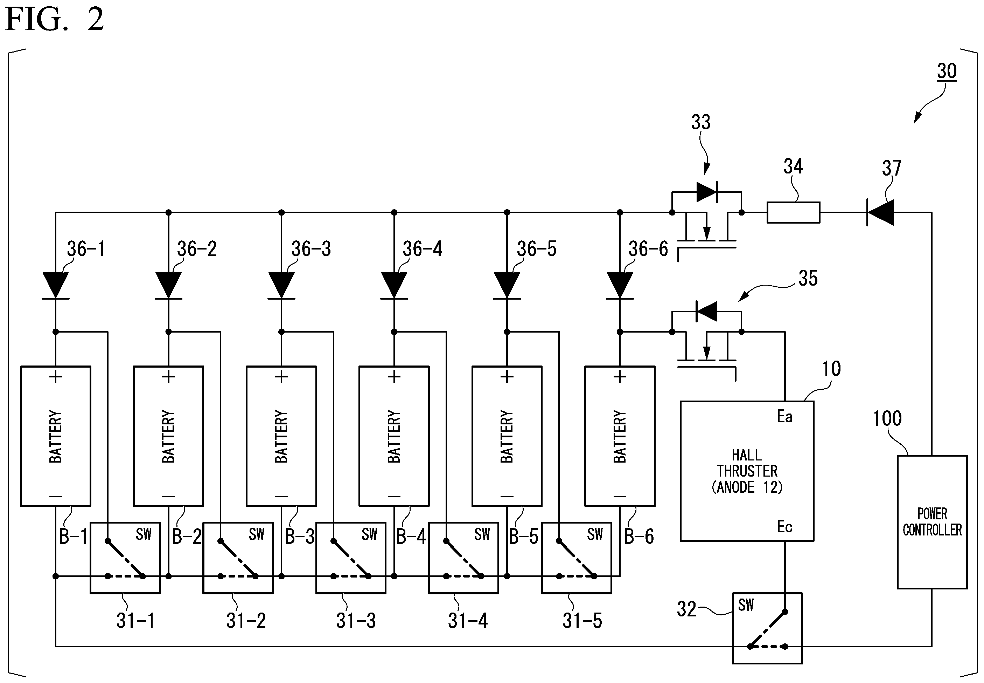

Next, a configuration of the anode power supply 30 will be described. FIG. 2 is a diagram showing an example of a configuration of a power supply device (anode power supply 30) according to a first embodiment. In FIG. 2, an anode 12, which is a power supply destination to which the anode power supply 30 supplies power, and a power controller 100, which is a power supply source from which the anode power supply 30 receives power are also shown. The anode power supply 30 includes, for example, six batteries B (batteries B-1 to B-6), five switches 31 (switches 31-1 to 31-5), a switch 32, a switch 33, a resistor 34, a switch 35, six diodes 36 (diodes 36-1 to 36-6), and a diode 37.

Each of the batteries B-1 to B-6 is a storage battery that stores power supplied by the power controller 100.

Each of the switches 31-1 to 31-5 corresponds to two adjacent batteries B and is a switch for exclusively switching a connection between the two corresponding batteries B. Each of the switches 31-1 to 31-5 is, for example, a mechanical contact switch. Each of the switches 31-1 to 31-5 switches the connection between the two corresponding batteries B to either a series connection or a parallel connection. For example, the switch 31-1 corresponds to the battery B-1 and the battery B-2, and connects the positive terminal of the battery B-1 and the negative terminal of the battery B-2 to establish a series connection between the battery B-1 and the battery B-2, and connects the negative terminals of the battery B-1 and the battery B-2 to establish a parallel connection between the battery B-1 and the battery B-2. For example, the switch 31-2 corresponds to the battery B-2 and the battery B-3, and establishes either a series connection or a parallel connection between the battery B-2 and the battery B-3 like the switch 31-1. The same applies to each of the switches 31-3 to 31-5. Switching of the connection of the corresponding batteries B in each of the switches 31-1 to 31-5 is controlled, for example, by the battery drive unit BD. The battery drive unit BD controls each of the switches 31 so that the batteries B are connected in parallel when the respective batteries B store (or are charged with) power supplied from the power controller 100, and controls each of the switches 31 so that the batteries B are connected in series when the power stored in the batteries B is output to operate the Hall thruster 10.

Each of the switches 31-1 to 31-5 is an example of a "first switching unit."

The switch 32 is a switch for exclusively switching a constituent element connected to both ends of the batteries B. More specifically, the switch 32 switches whether to connect the power controller 100 to both ends of each of the batteries B-1 to B-6 connected in parallel, or to connect the anode 12 between a positive terminal of the final-stage battery B-6 connected in series and a negative terminal of the first-stage battery B-1 connected in series. The switch 32 is, for example, a mechanical contact switch. An operation for switching a connection destination of the switch 32 is controlled, for example, by the battery drive unit BD simultaneously with each of the switches 31-1 to 31-5. That is, the battery drive unit BD controls the switch 32 so that the power controller 100 is connected to both ends of each battery B connected in parallel when each battery B is charged with power supplied by the power controller 100, and controls the switch 32 so that the anode 12 is connected to both ends of the batteries B-1 to B-6 connected in series when power stored in the batteries B is output to operate the Hall thruster 10.

The switch 32 also performs a function of isolating the power controller 100 from the Hall thruster 10 in operation. In general, in a Hall thruster including the Hall thruster 10, if discharge occurs between the anode 12 and the hollow cathode body 15a, noise is generated due to this discharge. When power stored in the batteries B is supplied to the anode 12 by connecting the batteries B in series to operate the Hall thruster 10, for example, the battery drive unit BD controls the switch 32 simultaneously with each of the switches 31-1 to 31-5, such that the switch 32 disconnects each battery B from the power controller 100. Thereby, in the anode power supply 30, it is possible to suppress a phenomenon in which noise generated due to discharge between the anode 12 and the hollow cathode body 15a wraps around to the power controller 100 side and adversely affects it. In a conventional anode power supply provided in a Hall thruster system, isolation between the power controller and the Hall thruster in operation can similarly be achieved, and, for example, DC power supplied by the power controller is converted into AC power by a switching circuit or the like, voltage-converted (stepped up) by a transformer or the like, and then rectified by a rectifier circuit or the like, so that it is converted back into DC power and then the DC power is supplied to the anode. In contrast, in the anode power supply 30, as described above, it is possible to isolate the power controller 100 from the Hall thruster 10 in operation in a configuration simpler than those of conventional anode power supplies because the power controller 100 can be disconnected from each battery B, i.e., from the anode 12, by merely switching the switch 32. That is, in the anode power supply 30, it is possible to obtain power to be supplied to the anode 12 as DC power without converting DC power supplied by the power controller 100 into AC power.

The switch 32 is an example of a "second switching unit." The positive terminal of the final-stage battery B-6 connected in series is an example of a "first positive terminal," and the negative terminal of the first-stage battery B-1 connected in series is an example of a "first negative terminal."

The switch 33 is a switch arranged between the positive terminal of each battery B and the power controller 100 and is configured to control an operation for charging each battery B with power supplied by the power controller 100. The switch 33 is, for example, a semiconductor switch including a semiconductor switching element such as an N-channel metal-oxide-semiconductor field-effect transistor (MOSFET). In FIG. 2, a parasitic diode (so-called body diode) generally provided in the metal-oxide-semiconductor field-effect transistor is also shown. A gate terminal of the semiconductor switching element constituting the switch 33 is controlled (a control voltage or control current is applied) by the battery drive unit BD. That is, the switch 33 is controlled by the battery drive unit BD so that the state of the switch 33 is either in an ON state or an OFF state. The battery drive unit BD controls the switch 33 so that the switch is in the ON state when each battery B is charged with power supplied by the power controller 100 and controls the switch 33 so that the switch 33 is in the OFF state when a voltage value corresponding to power stored in each battery B becomes a voltage value corresponding to power supplied (output) by the power controller 100, i.e., when charging of each battery B is completed. The switch 33 in the ON state also functions to limit current flowing from the power controller 100 to each battery B side.

The switch 33 is an example of a "fourth switching unit."

The resistor 34 is a resistor element for limiting a current flowing from the power controller 100 to each battery B when each battery B is changed with power supplied by the power controller 100. The resistor 34 limits the current flowing from the power controller 100 to each battery B (reduces the current) as the difference between a voltage value corresponding to power output by the power controller 100 and a voltage value corresponding to power stored in each battery B becomes smaller, i.e., as the state of charge of each battery B approaches a fully charged state. Thereby, in the anode power supply 30, it is possible to improve safety when each battery B is charged by the power controller 100. In the anode power supply 30, the resistor 34 may be omitted.

A configuration including the resistor 34 and the switch 33 is also an example of a "fourth switching unit."

The switch 35 is arranged between the positive terminal of the final-stage battery B-6 connected in series and the anode electrode Ea of the anode 12, and is a switch for performing control so that a voltage value according to power supplied from the batteries B-1 to B-6 connected in series to the anode 12 does not abruptly reach the maximum value when the Hall thruster 10 is operated. Here, the maximum value of the voltage value corresponding to power supplied to the anode 12 is a voltage value between the negative terminal of the lowest-stage (first-stage) battery B-1 connected in series and the positive terminal of the highest-stage (final-stage) battery B-6 connected in series. Like the switch 33, the switch 35 is also a semiconductor switch including a semiconductor switching element. FIG. 2 also shows a body diode generally provided in a metal-oxide-semiconductor field-effect transistor in the switch 35. A gate terminal of the semiconductor switching element constituting the switch 35 is also controlled (a control voltage or control current is applied) by the battery drive unit BD. However, the battery drive unit BD controls the gate terminal of the semiconductor switching element so that a time for which a value of a voltage applied to the anode 12 from the batteries B connected in series changes from 0 [V] to the maximum value, i.e., a so-called voltage rise time, becomes a predetermined time. More specifically, if the supply of power to the anode 12 from the battery B connected in series starts, the battery drive unit BD controls the gate terminal of the semiconductor switching element so that the ON state of the switch 35 is maintained when a predetermined time has elapsed until the voltage value reaches the maximum value while controls for the ON state and OFF-state of the switch 35 are iterated at predetermined time intervals. At this time, the battery drive unit BD gradually increases a duration during which the switch 35 is controlled to be in the ON state (and gradually decreases a duration during which the switch 35 is controlled to be in the OFF state) for each predetermined time interval. In other words, the battery drive unit BD controls the switch 35 as in a so-called soft turn-on function, thereby controlling the voltage rise time applied to the anode 12. Thereby, it is possible to apply a voltage to the anode 12 from the batteries B connected in series while suppressing a phenomenon in which a large current (inrush current) flows when the voltage value abruptly becomes the maximum value.

The switch 35 is an example of a "third switching unit."

Each of the diodes 36-1 to 36-6 is a rectifying element that allows or blocks a current flowing between the corresponding batteries B-1 to B-6 and the power controller 100. In particular, each of the diodes 36-1 to 36-6 blocks the flow of a current of power with which the corresponding batteries B-1 to B-6 are charged toward the power controller 100 side. Thereby, in the anode power supply 30, safety can be improved when power is supplied from the batteries B-1 to B-6 connected in series to the anode 12. In the anode power supply 30, instead of the diodes 36-1 to 36-6, a mechanical contact switch or a semiconductor switch may be used as a constituent element for blocking the flow of a current of power with which the corresponding batteries B-1 to B-6 are charged toward the power controller 100 side. In this case, the battery drive unit BD may control whether to allow or block a current flowing between the batteries B-1 to B-6 and the power controller 100. In the anode power supply 30, each of the diodes 36-1 to 36-6 may be omitted.

The diode 37 is a rectifying element that allows or blocks a current flowing between the batteries B-1 to B-6 and the power controller 100. In particular, the diode 37 blocks the flow of a current of power with which the batteries B-1 to B-6 are charged toward the power controller 100 side. Thereby, in the anode power supply 30, safety can be improved when power is supplied to the anode 12 from the batteries B-1 to B-6 connected in series. In the anode power supply 30, the diode 37 may be omitted.

In the configuration of the anode power supply 30 shown in FIG. 2, for example, when power is supplied to the anode 12 from the batteries B-1 to B-6 connected in series, it is also conceivable to further increase or decrease the value of the voltage that is applied to the anode 12. In this case, the anode power supply 30 may include a voltage conversion circuit, such as a DC-DC converter, for stepping up or stepping down the voltage, arranged between the positive terminal of the final-stage battery B-6 connected in series and the switch 35 (i.e., at a stage upstream of the switch 35), or between the switch 35 and the anode electrode Ea of the anode 12 (i.e., at a stage downstream of the switch 35). In this case, the configuration and operation of the anode power supply 30 can be easily conceived from the configuration and operation of the anode power supply 30 described above, and thus detailed description thereof is omitted.

The voltage conversion circuit is an example of a "voltage conversion unit."

### [Control and Operation of Anode Power Supply]

Next, a process for controlling the anode power supply 30 in the battery drive unit BD and an operation of the anode power supply 30 will be described. In the following description, an example in which a Hall thruster 10 of a power level of, for example, about 1 [kW], (hereinafter also referred to as a "high-power Hall thruster 10") capable of achieving a high thrust-to-power ratio and high propulsion efficiency, which are inherent characteristics of a Hall thruster, is mounted on a small spacecraft will be described. More specifically, an example in which the power controller 100 supplies power having a voltage value of 50 [V] and a current value of 1 [A] to the anode power supply 30 provided in the power processing unit 20, and the anode power supply 30 supplies power having a maximum voltage value of 300 [V] and a current value of 3 [A] to the anode 12 will be described. Here, it is assumed that a charge capacity of each battery B corresponds to power having a voltage value (= 50 [V]) and a current value (= 1 [A]) supplied from the power controller 100 to the anode power supply 30.

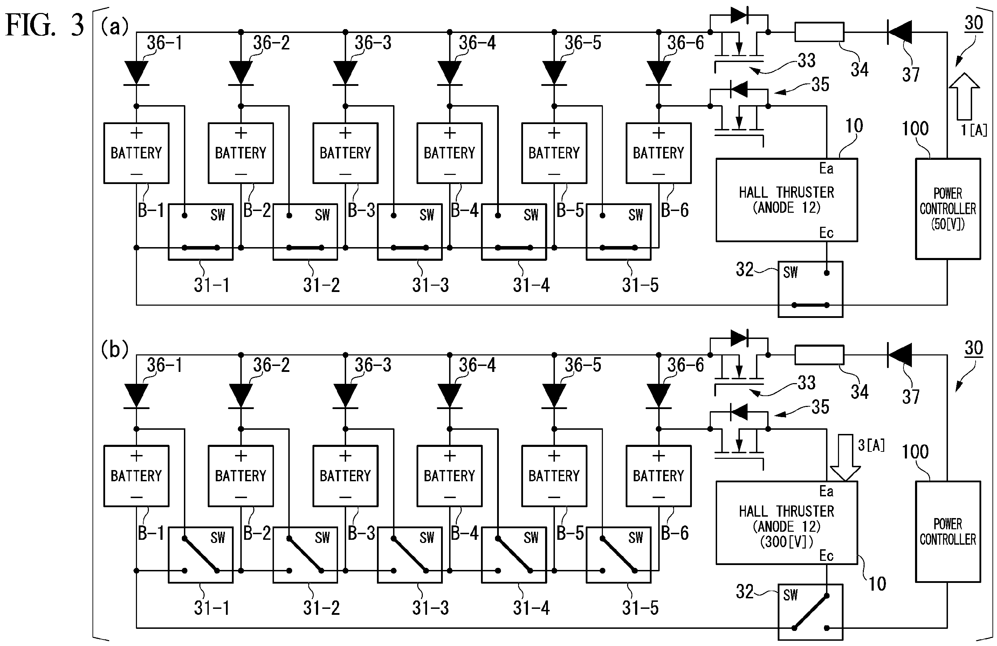

FIG. 3 is a diagram showing an example of the operation of the power supply device (anode power supply 30) according to the first embodiment. FIG. 3(a) shows the operation of the anode power supply 30 when the batteries B store (or are charged with) power supplied by the power controller 100, and FIG. 3(b) shows the operation of the anode power supply 30 when power stored in the battery B (or power with which the battery B is charged) is output to operate the Hall thruster 10.

When the batteries B store (or are charged with) the power supplied by the power controller 100, the battery drive unit BD controls the switches 31 and the switch 32 so that the respective batteries B are connected in parallel and the power supplied by the power controller 100 is supplied to each battery B. Thereby, in the anode power supply 30, as shown in FIG. 3(a), the switches 31-1 to 31-5 and the switch 32 are switched so that the negative terminals of the respective batteries B are connected to each other and the power controller 100 is connected thereto. At this time, the anode 12 of the Hall thruster 10 is disconnected from the anode power supply 30. Also, the battery drive unit BD controls the switch 33 so that the switch 33 is in an ON state. In FIG. 3(a), a state in which power having a voltage value (= 50 [V]) and a current value (= 1 [A]) is supplied from the power controller 100 to the anode power supply 30 is shown. Thereby, a total current of 1 [A] flows from the power controller 100 to the positive terminal of each battery B via the diode 37, the resistor 34, the switch 33, and the corresponding diode 36, and each battery B is charged with the power supplied by the power controller 100. More specifically, in the configuration of the anode power supply 30 shown in FIG. 2, because six batteries B (batteries B-1 to B-6) are provided, a current of 1/6 [A] flows through each battery B, and each battery is charged with the power supplied by the power controller 100. Thereafter, when the voltage value corresponding to the power stored in each battery B becomes the voltage value (=50 [V]) output by the power controller 100, the battery drive unit BD controls the switch 33 so that the switch 33 is in an OFF state. Thereby, a process in which each battery B is charged with the power supplied by the power controller 100 is completed.

When power stored in the battery B (or power with which the battery B is charged) is output to operate the Hall thruster 10, the battery drive unit BD controls the switches 31 and the switch 32 so that the respective batteries B are connected in series and the power is supplied to the anode 12 as if the respective batteries B constitute a single battery (hereinafter, referred to as a "series battery BS"). Thereby, in the anode power supply 30, as shown in FIG. 3(b), the respective batteries B are connected so that the positive terminal and the negative terminal of adjacent batteries B are connected, and further, the switches 31-1 to 31-5 and the switch 32 are switched so that the anode 12 is connected to both ends of the series battery BS. More specifically, the switch 32 is switched so that the positive terminal of the final-stage battery B-6 of the series battery BS is connected to the anode electrode Ea of the anode 12, and the negative terminal of the first-stage battery B-1 of the series battery BS is connected to the cathode electrode Ec of the Hall thruster 10. At this time, the power controller 100 is disconnected from the anode power supply 30. Also, the battery drive unit BD controls the switch 35 as in a soft turn-on function. Thereby, a voltage, which changes from a voltage (= 0 [V]) to a maximum voltage value of 300 [V] for a predetermined rise time and is maintained at the maximum voltage value after the predetermined rise time elapses, is applied to the anode 12 from the series battery BS. In FIG. 3(b), a state in which power having a voltage value (= 300 [V]) and a current value (= 3 [A]) is supplied from the series battery BS to the anode 12 via the switch 35 is shown. Here, although a current of 3 [A] flows from the series battery BS to the anode 12 in FIG. 3(b), the current value of the actual current flowing to the anode 12 is a current value corresponding to the load characteristics of the plasma within the channel portion 11. Thereby, the Hall thruster 10 generates thrust for the spacecraft by ionizing the propellant gas with plasma and ejecting the extracted ions into outer space.

With such a configuration and operation (control by the battery drive unit BD), in the anode power supply 30, the respective batteries B are connected in parallel and charged with the power supplied by the power controller 100 (power of the system power supply), and the respective batteries B are connected in series (as the series battery BS) to supply power to the anode 12. Thereby, in the anode power supply 30, it is possible to supply power to the anode 12 more efficiently and it is possible to mount, on a small spacecraft for which the power that can be supplied by the system power source is not high, a high-power Hall thruster 10 having a high thrust-to-power ratio representing thrust generated per unit power and high specific thrust corresponding to fuel efficiency in terms of how much propellant gas is consumed. Thereby, it is possible to enhance the advantages of a small spacecraft equipped with the Hall thruster system 1 including the power processing unit 20 to which the anode power supply 30 is applied. More specifically, because a high-power Hall thruster 10 has a higher thrust-to-power ratio and specific thrust than a low-power Hall thruster, when a spacecraft is moved in a similar way by a high-power Hall thruster 10 and a low-power Hall thruster, an amount of propellant gas used, which accounts for a relatively large proportion of the weight of the spacecraft, can be reduced. In other words, when an amount of change in a required velocity for the movement of the spacecraft is the same, an amount of propellant gas loaded can be reduced. On the other hand, when the amount of propellant gas loaded is the same, the amount of change in the velocity of the spacecraft can be increased. This leads to the expansion of a range of missions that the spacecraft can perform.

Also, for example, although it is necessary to increase the power capacity of a battery corresponding to the battery 140 and the power controller when it is considered to mount a high-power Hall thruster of about 1 [kW] on a small spacecraft on the basis of a conventional concept, it is possible to implement a high-power Hall thruster 10 without increasing the power capacity of the battery 140 and the power controller 100 in the anode power supply 30. That is, when the anode power supply 30 provided in the power processing unit 20 is configured to include the batteries B, because the battery 140 and the power controller 100 can remain in configurations equivalent to conventional ones without an increased power capacity, even if the power processing unit 20 becomes somewhat larger than a conventional power processing unit, for example, the overall configuration of a high-power Hall thruster 10 of about 1 [kW] can be reduced in size and can be mounted on a small spacecraft. Moreover, when the power processing unit 20 is compared with a conventional high-capacity power processing unit, the power processing unit 20 has an advantage in that the shorter the ion ejection time per operation of the high-power Hall thruster 10, the smaller the charging capacity required for the battery B. Furthermore, in switching power supplies constituting respective power supplies provided in a conventional high-capacity power processing unit, because a switching operation itself becomes a noise source even at timings unrelated to discharge or plasma generated by the discharge, the anode power supply 30 configured to include the batteries B also has an advantage from the viewpoint of noise.

In FIG. 2, an example of a configuration in which the switches 31 and 32 are mechanical contact switches and the switches 33 and 35 are semiconductor switches is shown. However, the configurations of the switches 31, 32, 33, and 35 are not limited to those shown in FIG. 2 as long as the above-described functions can be implemented. For example, one or both of the switches 31 and 32 may be semiconductor switches, and one or both of the switches 33 and 35 may be mechanical contact switches.

### [Modification Example of Anode Power Supply]

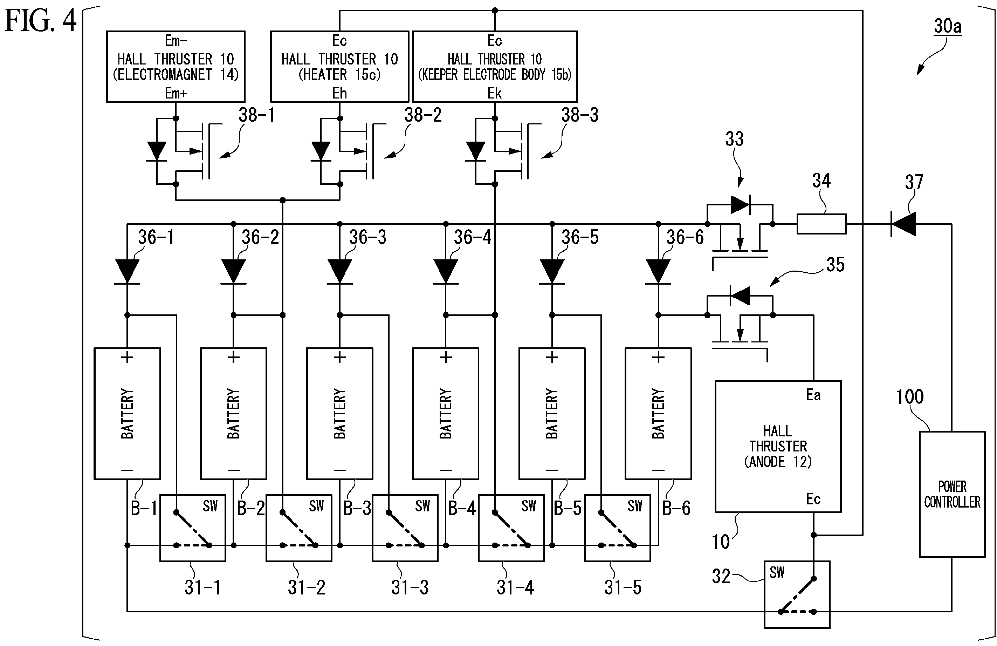

In FIG. 2, an example in which the anode power supply 30 supplies power to the anode 12 provided in the Hall thruster 10 is shown. However, the constituent element of the Hall thruster 10 to which the anode power supply 30 supplies power is not limited to the anode 12. That is, the anode power supply 30 may be configured to supply power to constituent elements other than the anode 12 provided in the Hall thruster 10. In other words, the anode power supply 30 may be configured to serve as one or more of power supplies such as a keeper power supply 40, a heater power supply 50, a coil power supply 60, and a valve power supply (not shown). FIG. 4 is a diagram showing another usage example and a configuration example of the power supply device (anode power supply 30) according to the first embodiment.

In FIG. 4, an example of an anode power supply 30 (hereinafter referred to as an "anode power supply 30a") configured to supply corresponding power to each of the keeper electrode body 15b and the heater 15c provided in the hollow cathode portion 15 and the electromagnet 14 in addition to the anode 12 is shown. In FIG. 4, the anode 12, the keeper electrode body 15b, the heater 15c, and the electromagnet 14, which are power supply destinations to which the anode power supply 30a supplies power, and the power controller 100, which is a power supply source from which the anode power supply 30a receives power are also shown. The anode power supply 30a includes, for example, six batteries B (batteries B-1 to B-6), five switches 31 (switches 31-1 to 31-5), a switch 32, a switch 33, a resistor 34, a switch 35, six diodes 36 (diodes 36-1 to 36-6), a diode 37, and three switches 38 (switches 38-1 to 38-3). In the constituent elements of the anode power supply 30a, constituent elements denoted by reference signs identical to those of the anode power supply 30 are similar constituent elements, and therefore, detailed descriptions thereof are omitted.

Each of the switches 38-1 to 38-3 is arranged between the positive terminal of a corresponding battery B connected in series and a corresponding constituent element of the Hall thruster 10. More specifically, the switch 38-1 is arranged between the positive terminal of the second-stage battery B-2 connected in series and the coil positive electrode Em+ of the coil of the electromagnet 14. The switch 38-2 is arranged between the positive terminal of the second-stage battery B-2 connected in series and the heater electrode Eh of the heater 15c. The switch 38-3 is arranged between the positive terminal of the fourth-stage battery B-4 connected in series and the keeper electrode Ek of the keeper electrode body 15b. When the keeper power supply 40 is configured to supply power from the anode power supply 30 to the keeper electrode body 15b by, for example, branching a path between the switch 35 for the anode power supply 30 and the anode electrode Ea and connecting an ignition circuit (a circuit for causing discharge between the hollow cathode body 15a and the keeper electrode body 15b) including a passive element such as a capacitor element, the switch 38-3 for the keeper power supply 40 may be omitted. Each switch 38 is a switch for controlling whether or not power is supplied from a corresponding location of the batteries B-1 to B-6 connected in series to a corresponding constituent element when the Hall thruster 10 is operated. Like the switch 35, each switch 38 is also a semiconductor switch including a semiconductor switching element. In FIG. 4, a body diode that is generally provided in a metal-oxide-semiconductor field-effect transistor is also shown in the switch 38. A gate terminal of the semiconductor switching element constituting the switch 38 is also controlled (a control voltage or control current is applied) by the battery drive unit BD. At this time, the battery drive unit BD controls the switch 38 as in a soft turn-on function of the switch 35, or controls the switch 38 to switch between an ON state and an OFF state. Here, control for switching the switch 38 between the ON state and the OFF state in the battery drive unit BD is equivalent to a case where a predetermined rise time is set to zero in control similar to the soft turn-on function.

The battery drive unit BD controls the switches 38 in accordance with the constituent elements of the Hall thruster 10 to which power is to be supplied via the respective switches 38. More specifically, when the power stored in the series battery BS is output to the electromagnet 14 to operate the Hall thruster 10, the battery drive unit BD turns on the switch 38-1 by controlling a gate terminal of a semiconductor switching element of the switch 38-1 so that the coil of the electromagnet 14 is connected to both ends of the batteries B-1 to B-2 connected in series. Thereby, a voltage having a voltage value (= 100 [V]) is applied to the coil (coil positive electrode Em+) of the electromagnet 14. When the power stored in the series battery BS is output to the heater 15c to operate the Hall thruster 10, the battery drive unit BD turns on the switch 38-2 by controlling a gate terminal of a semiconductor switching element of the switch 38-2 so that the heater 15c is connected to both ends of the batteries B-1 to B-2 connected in series. Thereby, a voltage having a voltage value (= 100 [V]) is applied to the heater 15c (heater electrode Eh). When the power stored in the series battery BS is output to the keeper electrode body 15b to operate the Hall thruster 10, the battery drive unit BD controls a gate terminal of a semiconductor switching element of the switch 38-3 so that the keeper electrode body 15b is connected to both ends of the batteries B-1 to B-4 connected in series and the voltage value changes to the maximum value during a predetermined rise time as in the soft turn-on function. Thereby, a voltage that changes from a voltage (= 0 [V]) to the maximum voltage value (= 200 [V]) during the predetermined rise time, and is maintained at a maximum voltage value (= 100 [V]) when the predetermined rise time has elapsed, is applied to the keeper electrode body 15b (keeper electrode Ek). Thereby, the voltage from the battery B-4 of the series battery BS is applied to the keeper electrode body 15b in a state in which the flow of a large current (inrush current), which occurs when the voltage value abruptly becomes the maximum value, is suppressed.

The anode power supply 30a is also an example of a "power supply device." The keeper electrode body 15b, the heater 15c, and the coil of the electromagnet 14 are examples of "second power supply destinations." Each of the switches 38 (switches 38-1 to 38-3) is an example of a "fifth switch unit." A positive terminal of the second-stage battery B-2 connected in series and a positive terminal of the fourth-stage battery B-4 connected in series are examples of a "second positive terminal."

As described above, it is possible to reduce the number of corresponding power supplies and further reduce weight in a spacecraft equipped with the Hall thruster system 1 including the power processing unit 20 to which the anode power supply 30a is applied by adopting a configuration in which power is supplied to constituent elements other than the anode 12 provided in the Hall thruster 10 from corresponding locations of the batteries B-1 to B-6 connected in series. In the spacecraft equipped with the Hall thruster system 1 including the power processing unit 20 to which the anode power supply 30a shown in FIG. 4 is applied, it is possible to reduce the keeper power supply 40 corresponding to the keeper electrode body 15b, the heater power supply 50 corresponding to the heater 15c, and the coil power supply 60 corresponding to the coil of the electromagnet 14 and achieve further weight reduction as compared to a spacecraft equipped with the Hall thruster system 1 including the power processing unit 20 to which the anode power supply 30 shown in FIG. 2 is applied. Furthermore, when the anode power supply 30a shown in FIG. 4 has a function of a valve power supply (not shown), i.e., a configuration in which power (voltage or current) is supplied to a valve arranged in the gas supply pipe 12a to control the opening and closing of the valve, it is possible to further reduce a valve power supply (not shown) in addition to the keeper power supply 40, the heater power supply 50, and the coil power supply 60 in the spacecraft equipped with the Hall thruster system 1 including the power processing unit 20 to which the anode power supply 30a is applied and achieve further weight reduction of the spacecraft equipped with the Hall thruster system 1.

Although a configuration including the respective switches 38, i.e., the switch 38-1 corresponding to the coil of the electromagnet 14, the switch 38-2 corresponding to the heater 15c, and the switch 38-3 corresponding to the keeper electrode body 15b in the anode power supply 30a shown in FIG. 4, has been described, the anode power supply 30a is not limited to a configuration including three switches 38 (switches 38-1 to 38-3). That is, the configuration is not limited to the configuration including three switches 38, and may be a configuration including one or more switches 38.

In FIG. 4, an example of a configuration in which the switches 38 are semiconductor switches is shown. However, the configuration of the switches 38 is not limited to that shown in FIG. 4 as long as the respective functions described above can be implemented. That is, one or more switches 38-1 to 38-3 may be mechanical contact switches. For example, the switches 38-1 and 38-2, which are controlled to switch between an ON state and an OFF state, may be mechanical contact switches, and the switch 38-3, which is controlled as in a soft turn-on function, may also be a mechanical contact switch.

### <Second Embodiment>

### [Configuration of Anode Power Supply]

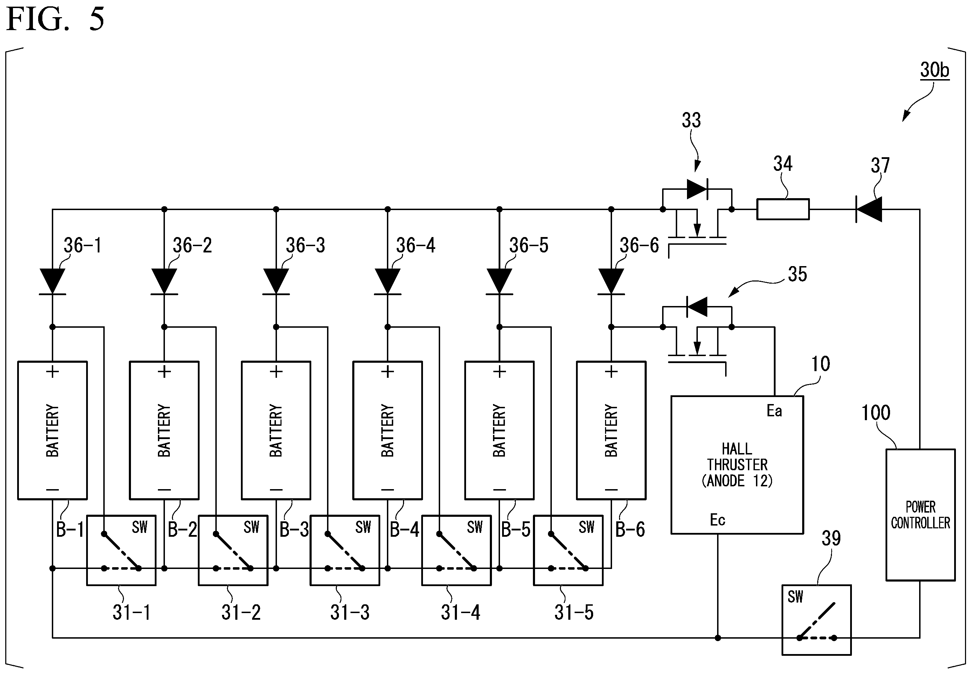

Hereinafter, a configuration of an anode power supply 30 according to a second embodiment will be described. In the following description, the anode power supply 30 of the second embodiment is referred to as an "anode power supply 30b." FIG. 5 is a diagram showing an example of a configuration of a power supply device (anode power supply 30b) according to the second embodiment. In FIG. 5, an anode 12 as a power supply destination to which the anode power supply 30b supplies power like the anode power supply 30 of the first embodiment shown in FIG. 2, and a power controller 100 as a power supply source from which the anode power supply 30b receives the supply of power are also shown. The anode power supply 30b includes, for example, six batteries B (batteries B-1 to B-6), five switches 31 (switches 31-1 to 31-5), a switch 33, a resistor 34, a switch 35, six diodes 36 (diodes 36-1 to 36-6), a diode 37, and a switch 39.

In the anode power supply 30b, the switch 32 provided in the anode power supply 30 is replaced with the switch 39. Also, the anode power supply 30b has a configuration in which a negative terminal of the first-stage battery B-1 of a series battery BS and a cathode electrode Ec of a Hall thruster 10 are connected all the time. Other configurations and constituent elements in the anode power supply 30b are similar to those in the anode power supply 30 of the first embodiment. Therefore, redundant descriptions of the other configurations and constituent elements provided in the anode power supply 30b are omitted.

The switch 39 is a switch for exclusively switching whether or not to connect the power controller 100 to both ends of the battery B. More specifically, the switch 39 connects the power controller 100 to both ends of the respective batteries B connected in parallel when the respective batteries B is charged with power supplied by the power controller 100, and the switch 39 disconnects the batteries B from the power controller 100 when power stored by connecting the respective batteries B in series is supplied to the anode 12 so that the Hall thruster 10 is operated. That is, the switch 39 performs a function of isolating the power controller 100 from the Hall thruster 10 in operation, like the switch 32 provided in the anode power supply 30 of the first embodiment. The switch 39 is also, for example, a mechanical contact switch, like the switch 32 provided in the anode power supply 30 of the first embodiment. Switching of a connection destination of the switch 39 is also controlled, for example, by the battery drive unit BD simultaneously with each of the switches 31-1 to 31-5, as in the switch 32 provided in the anode power supply 30 of the first embodiment. That is, the battery drive unit BD controls the switch 39 to connect the power controller 100 to both ends of each battery B connected in parallel when each battery B is charged with power supplied by the power controller 100, and the battery drive unit BD controls the switch 39 to disconnect the power controller 100 from the batteries B-1 to B-6 connected in series when the power stored in the batteries B is output to operate the Hall thruster 10. Thereby, in the anode power supply 30b, as in the anode power supply 30 of the first embodiment, it is also possible to suppress a phenomenon in which noise generated due to discharge between the anode 12 and the hollow cathode body 15a wraps around to the power controller 100 side and adversely affects it. Thereby, in the anode power supply 30b, as in the anode power supply 30 of the first embodiment, it is also possible to obtain power to be supplied to the anode 12 as a DC without performing a process for converting DC power supplied by the power controller 100 into AC power or the like as in an anode power supply provided in the conventional Hall thruster system, and it is also possible to isolate the power controller 100 from the Hall thruster 10 in operation with a configuration simpler than those of conventional anode power supplies.

The switch 39 is an example of a "second switch unit."

Control of the anode power supply 30b in the battery drive unit BD, and the operation of the anode power supply 30b, can be easily conceived from the operation of the anode power supply 30 of the first embodiment described with reference to FIG. 3, and therefore, detailed descriptions thereof are omitted. The anode power supply 30b may also have a configuration in which power is supplied to constituent elements other than the anode 12 provided in the Hall thruster 10, like the anode power supply 30 of the first embodiment described with reference to FIG. 4. The configuration in this case can also be easily conceived from modifications of the anode power supply 30 of the first embodiment shown in FIG. 4, and therefore, detailed descriptions thereof are omitted.

With such a configuration and operation (control by the battery drive unit BD), in the anode power supply 30b, as in the anode power supply 30 of the first embodiment, the respective batteries B are also connected in parallel to be charged with power (power of the system power supply) supplied by the power controller 100, and the respective batteries B are connected in series (as a series battery BS) to supply power to the anode 12. Thereby, in the anode power supply 30b, as in the anode power supply 30 of the first embodiment, it is also possible to supply power more efficiently to the anode 12, mount a high-power Hall thruster 10 on a small spacecraft for which the power capable of being supplied by the system power supply is not large, and enhance the advantage of a small spacecraft equipped with the Hall thruster system 1 including the power processing unit 20 to which the anode power supply 30b is applied.

Although an example of a configuration in which the switch 39 is a mechanical contact switch is shown in FIG. 5, the configuration of the switch 39 is not limited to that shown in FIG. 5 as long as the above-described functions can be implemented. For example, the switch 39 may be a semiconductor switch.

As described above, the anode power supply 30 of the embodiment (including the anode power supply 30a and the anode power supply 30b) is provided in the power processing unit 20 of the Hall thruster system 1 in place of an anode power supply provided in a power processing unit of a conventional Hall thruster system. Also, in the anode power supply 30 of the embodiments, the batteries B provided in the anode power supply 30 are connected in parallel to be charged with power supplied by the power controller 100, and the batteries B are connected in series to apply a high voltage to the anode 12. Thereby, in the Hall thruster system 1 including the power processing unit 20 to which the anode power supply 30 of the embodiment is applied, as in a conventional Hall thruster system, discharge also occurs between the anode 12 and the hollow cathode body 15a if electrons of the propellant gas are emitted from the hollow cathode portion 15 side to the channel portion 11 side. Also, in the Hall thruster system 1 including the power processing unit 20 to which the anode power supply 30 of the embodiment is applied, as in a conventional Hall thruster system, ions extracted by ionizing the propellant gas with plasma generated by the discharge are also accelerated by an electric field generated by the anode 12 and the hollow cathode body 15a and are ejected from the channel portion 11 into outer space. Thereby, in the Hall thruster system 1 including the power processing unit 20 to which the anode power supply 30 of the embodiment is applied, as in a conventional Hall thruster system, thrust can also be imparted to the spacecraft. Moreover, because the anode power supply 30 of the embodiment supplies power from the batteries B provided in the anode power supply 30 to the anode 12, it is possible to mount the high-power Hall thruster 10 on a small spacecraft without increasing a power capacity of a battery such as a system power supply or a power controller, which would be required when adopting an intermittent operation scheme considered in conventional Hall thruster systems.

In the above-described embodiments, a case where the battery drive unit BD is provided in the anode power supply 30 has been described. However, the battery drive unit BD is not limited to a configuration provided in the anode power supply 30. For example, the battery drive unit BD may have a configuration provided in the power processing unit 20 or the power controller 100. In this case, it is only necessary for the configuration of the anode power supply 30 and the control of the respective switches by the battery drive unit BD to be made equivalent to the configuration of the anode power supply 30 and the control of the battery drive unit BD in the above-described embodiment. Accordingly, detailed descriptions of the configuration of the anode power supply 30 and the control by the battery drive unit BD in a configuration in which the battery drive unit BD is provided in the power processing unit 20 or the power controller 100 are omitted.

In the above-described embodiment, a case where the anode power supply 30 includes six batteries B (batteries B-1 to B-6) has been described. However, the number of batteries B provided in the anode power supply 30 is not limited to six, and it is only necessary to perform determination, for example, on the basis of the power supplied by the power controller 100 to the anode power supply 30 and the power supplied by the anode power supply 30 to the anode 12. Also, if even the number of batteries B provided in the anode power supply 30 is different, it is only necessary for the configuration of the anode power supply 30 and the control of the respective switches in the battery drive unit BD to be made equivalent to the configuration of the anode power supply 30 and the control of the battery drive unit BD in the above-described embodiment. Accordingly, detailed descriptions of the configuration of the anode power supply 30 in which the number of batteries B to be provided is different and the control by the battery drive unit BD are omitted.

In the above-described embodiment, the configuration of each battery B, i.e., the number and connection of battery cells provided in each battery B, has not been particularly described. It is only necessary to determine the number and connection of battery cells provided in each battery B, for example, on the basis of the duration of ion ejection per operation in the Hall thruster 10. Here, the duration of ion ejection per operation in the Hall thruster 10 is also related to a charge capacity (electrical capacity) of the battery cells. Therefore, the connection method of the battery cells within the battery B is not limited to a series connection, and may be a connection method for combining a series connection and a parallel connection to increase the electrical capacity of the battery B while keeping the output voltage of the battery B constant. For example, a case where each battery cell has a voltage value of 3.7 [V] and an electrical capacity of 1 [Ah], and the battery B includes 20 battery cells is considered. In this case, in the battery B, for example, two sets of battery cells formed by connecting 10 battery cells in series are connected in parallel (i.e., battery cells are arranged in a configuration of ten battery cells connected in series and two battery cells connected in parallel), whereby one battery B having a voltage value of 37 [V] and an electrical capacity of 20 [Ah] can be configured. Also, when eight batteries B of this configuration are used to form the anode power supply 30 having a configuration as shown in FIG. 2, the anode power supply 30 can supply power having a maximum voltage value of 296 [V] and a current value of 160 [Ah] to the anode 12. Even in this case, it is only necessary for the configuration of the anode power supply 30 and the control of the respective switches by the battery drive unit BD to be made equivalent to the configuration of the anode power supply 30 and the control of the battery drive unit BD in the above-described embodiment. Accordingly, detailed descriptions of the configuration of the anode power supply 30 and the control by the battery drive unit BD in this case are omitted.

In the above-described embodiments, an example in which the anode power supply 30 is applied to the Hall thruster system 1 has been described. However, the system of the electric propulsion device to which the anode power supply 30 is applied is not limited to the Hall thruster system 1, and the anode power supply 30 can be applied to any electric propulsion system that ejects ions extracted by ionizing a propellant gas with plasma generated by discharge (plasma discharge) into outer space. In other words, it is possible to adopt the anode power supply 30 as a power supply for supplying power to at least a constituent element that causes plasma discharge in any electric propulsion system involving plasma discharge. For example, the anode power supply 30 can be adopted in an ion engine as a power supply for supplying power to a constituent element that emits ions extracted by ionizing a propellant gas. In this case, it is only necessary for the configuration of the anode power supply 30 and the control of the respective switches in the battery drive unit BD to be made equivalent (adapted to the ion engine) to the configuration of the anode power supply 30 and the control of the battery drive unit BD in the above-described embodiment. Accordingly, detailed descriptions of the configuration of the anode power supply 30 and the control of the battery drive unit BD when the anode power supply 30 is adopted in an ion engine are omitted.

Although modes for carrying out the present invention have been described using embodiments, the present invention is not limited to the embodiments and various modifications and substitutions can also be made without departing from the scope and spirit of the present invention.

### REFERENCE SIGNS LIST

1 Hall thruster system
10 Hall thruster
11 Channel portion
12 Anode
12a Gas supply pipe
13 Wall portion
14 Electromagnet
14a Internal electromagnet
14b External electromagnet
15 Hollow cathode portion
15a Hollow cathode body
15b Keeper electrode body
15c Heater
15d Gas supply pipe
20 Power processing unit (PPU)
30, 30a, 30b Anode power supply
31, 31-1, 31-2, 31-3, 31-4, 31-5 Switch
32 Switch
33 Switch
34 Resistor
35 Switch
36, 36-1, 36-2, 36-3, 36-4, 36-5, 36-6 Diode
37 Diode
38, 38-1, 38-2, 38-3 Switch
39 Switch
40 Keeper power supply
50 Heater power supply
60 Coil power supply
100 Power controller
120 Solar cell
140 Battery
B, B-1, B-2, B-3, B-4, B-5, B-6, B-n Battery
BD Battery drive unit
Ea Anode electrode
Ec Cathode electrode
Ek Keeper electrode
Eh Heater electrode
Em+ Coil positive electrode
Em- Coil negative electrode

## Claims

1. A power supply device for supplying power to an electric propulsion device that generates thrust for a spacecraft, the power supply device comprising:
a plurality of batteries;
a plurality of first switch units, each of which is provided in correspondence with a pair of two adjacent batteries, and configured to switch a connection between the two adjacent batteries to a series connection or a parallel connection; and
a second switch unit configured to switch whether or not to connect a power supply source to each of the batteries.

2. The power supply device according to claim 1, wherein the second switch unit switches whether to connect the power supply source to both ends of each of the batteries connected in parallel or connect a first positive terminal side including a positive terminal of a final-stage battery connected in series and a first negative terminal that is a negative terminal of a first-stage battery connected in series to a first power supply destination that is a constituent element provided in the electric propulsion device.

3. The power supply device according to claim 1,
wherein a first positive terminal side including a positive terminal of a final-stage battery connected in series and a first negative terminal that is a negative terminal of a first-stage battery connected in series are connected to a first power supply destination that is a constituent element provided in the electric propulsion device, and
wherein the second switch unit
connects a path in which the first negative terminal and the first power supply destination are connected to the power supply source when the electric propulsion device does not generate the thrust, and
disconnects the path from the power supply source when the electric propulsion device generates the thrust.

4. The power supply device according to any one of claims 1 to 3, further comprising:
a third switch unit arranged between a first positive terminal including a positive terminal of a final-stage battery connected in series and a first power supply destination that is a constituent element provided in the electric propulsion device, and configured to cont^{r}ol a rise time of a voltage so that a voltage applied from the batteries connected in series to the first power supply destination becomes a voltage between the first positive terminal that is at a maximum voltage and a first negative terminal that is a negative terminal of a first-stage battery connected in series during a predetermined time.

5. The power supply device according to claim 4, further comprising:
a fourth switch unit arranged between a positive terminal of each of the batteries connected in parallel and the power supply source and configured to be in an OFF state when a voltage according to power stored in each of the batteries reaches a predetermined voltage and to limit current flowing from the power supply source to the positive terminal side of each battery when the fourth switch unit is in an ON state.

6. The power supply device according to claim 5, further comprising:
a voltage conversion unit arranged upstream or downstream of the third switch unit and configured to step up or step down a voltage between the first positive terminal and the first power supply destination.

7. The power supply device according to claim 6, further comprising:
a fifth switch unit configured to control a connection between a second positive terminal that is a positive terminal of any stage among the batteries connected in series and a second power supply destination that is a constituent element provided in the electric propulsion device.

8. The power supply device according to claim 7, wherein the electric propulsion device generates the thrust by ionizing a predetermined gas with plasma generated by discharge caused by applying a high voltage and ejecting extracted ions.

9. The power supply device according to claim 8,
wherein the electric propulsion device is a Hall thruster, and
wherein the power supply device is provided in a power processing unit that supplies power to respective constituent elements of the Hall thruster.

10. The power supply device according to claim 9,
wherein the power supply source is a power controller that supplies power from a system power supply including at least one of a power generation device provided in the spacecraft and a storage battery that stores power generated by the power generation device to the power processing unit,
wherein the first power supply destination is an anode provided in the Hall thruster,
wherein the third switch unit is arranged between the first positive terminal and an anode electrode of the anode, and
wherein the first negative terminal is connected to a cathode electrode of a hollow cathode provided in the Hall thruster.

11. The power supply device according to claim 10, wherein the first switch unit and the second switch unit are mechanical contact switches.

12. The power supply device according to claim 11, wherein the third switch unit is a semiconductor switch in which a semiconductor switching element and a current rectifying element are connected in parallel.

13. The power supply device according to claim 12, wherein the fourth switch unit is a semiconductor switch in which a semiconductor switching element and a current rectifying element are connected in parallel.

14. The power supply device according to claim 13, wherein the fifth switch unit is a semiconductor switch in which a semiconductor switching element and a current rectifying element are connected in parallel.

15. The power supply device according to claim 14,
wherein the second power supply destination is a constituent element other than the anode provided in the Hall thruster, and
wherein the fifth switch unit is arranged between the second positive terminal and an electrode of a corresponding constituent element other than the anode.

16. The power supply device according to claim 15, wherein the electrode of the constituent element other than the anode is a keeper electrode of a hollow cathode portion provided in the Hall thruster.

17. The power supply device according to claim 15, wherein the electrode of the constituent element other than the anode is a heater electrode of a heater of a hollow cathode portion provided in the Hall thruster.

18. The power supply device according to claim 15, wherein the electrode of the constituent element other than the anode is a coil electrode of a coil constituting an electromagnet provided in the Hall thruster.

19. The power supply device according to claim 15, wherein the electrode of the constituent element other than the anode is an electrode of a valve that is arranged in a gas supply pipe for supplying the predetermined gas to the anode and controls at least whether or not the predetermined gas is supplied to the anode.
